# FASCICULE DE BREVET EUROPEEN

(11) **EP 1 190 893 B1**
(45) Date de publication et mention de la délivrance du brevet: **02.01.2008**
(21) Numéro de dépôt: 01402402.0
(22) Date de dépôt: 19.09.2001
(51) Int. Cl.: B60N 2/48, B60N 2/20

(54) **Appui-tête à plusieurs positions et siège muni de l'appui-tète**
Mehrfach positionierbare Kopfstütze und Sitz mit einer solchen Kopfstütze
Multi-position headrest and seat provided with such a headrest

(30) Priorité: 20.09.2000 FR 0011980
(43) Date de publication de la demande: 27.03.2002
(73) Titulaire: Centre d'Etude et de Recherche pour l'Automobile (CERA), 51100 Reims (FR)
(72) Inventeur: Patte, Damien, 51490 Epoye (FR); Albacete, Juan, 17458 Fornells de la Selva (ES); Rosa, Miguel Angel, 17005 Girona (ES)
(74) Mandataire: Sayettat, Julien Christian

(56) Documents cités:
- DE-C- 3 512 648
- DE-U- 7 321 998
- FR-A- 2 760 416
- FR-A- 2 782 038
- US-A- 5 669 668
- US-A- 5 681 079

## Description

L'invention concerne un appui-tête de siège, notamment de siège de véhicule automobile, ainsi qu'un tel siège muni de l'appui-tête.

L'appui-tête est par exemple destiné à être monté sur un siège de chauffeur ou de passager, par exemple avant et/ou arrière de voiture de tourisme, pour le confort et la sécurité de la personne assise sur le siège.

On connaît un appui-tête comportant un coussin fixé à au moins une broche pour la fixation de l'appui-tête sur le siège.

Les appuis-tête connus de ce type se prêtent mal au basculement vers l'avant du siège avant, pourtant nécessaire dans les voitures sans porte arrière pour passager, dites « 3 portes », pour permettre aux personnes d'accéder à ou de sortir de la banquette arrière de la voiture. En effet, le coussin de l'appui-tête du siège avant se trouve dans le prolongement du dossier du siège, ce qui est encombrant lorsque le dossier est soulevé et/ou doit être incliné vers l'avant lors du basculement. L'appui-tête peut alors rencontrer le revêtement du toit du véhicule ou son tableau de bord, avec les risques d'endommagement de l'appui-tête ou de coincement du siège que cela comporte. La seule solution est alors de réduire ia hauteur du coussin mais est indésirable car défavorable au confort et à la sécurité.

On connaît par ailleurs des documents US- 5 669 668 un appui-tête selon le préambule de la revendication 1.

L'invention vise à remédier aux inconvénients de l'état de la technique et à obtenir un appui-tête ergonomique.

Un premier objet de l'invention est un appui-tête de siège, notamment de siège de véhicule automobile, selon la revendication 1.

Le coussin tient ainsi moins de place en hauteur en position rabattue, facilitant le basculement du siège dans les voitures « 3 portes ».

Dans une première réalisation suivant l'invention, le déplacement latéral est provoqué par un bouton accessible de la main prévu sur le coussin, pour faire passer le coussin en position redressée de la position verrouillée à une position déverrouillée, ce qui permet de choisir la position voulue du coussin et ce en appuyant sur le bouton pour le rabattre ou en le poussant de la main jusqu'à la position redressée.

Dans une deuxième réalisation suivant invention, un deuxième moyen de précontrainte du coussin de la position redressée déverrouillée vers la position redressée verrouillée est prévu, le coussin étant monté sur axe de rotation de telle manière qu'il peut être déplacé par rapport à la broche pour passer de la position redressée verrouillée à la position redressée déverrouillée à l'encontre du deuxième moyen de précontrainte.

Grâce à cette réalisation, l'utilisateur manipule avec aisance l'appui-tête lorsqu'il veut le faire passer en position redressée ou rabattue et se dispense d'appuyer sur un bouton. Le coussin est déverrouillé de la position redressée simplement en appuyant de la main sur le coussin à l'encontre du deuxième moyen de précontrainte, par exemple en poussant ou tirant de la main une joue latérale extérieure ou intérieure de l'anneau formant le coussin.

Dans une troisième réalisation suivant l'invention, un deuxième moyen de précontrainte du coussin de la position redressée déverrouillée vers la position redressée verrouillée et un câble de commande à distance pour faire passer le coussin de la position redressée verrouillée à la position redressée déverrouillée à l'encontre du deuxième moyen de précontrainte sont prévus.

Cette réalisation permet de rabattre automatiquement le coussin, en couplant le câble de commande avec un organe de manoeuvre du dossier du siège, par exemple la manette permettant de faire basculer le siège ou d'incliner son dossier vers son assise.

Suivant une caractéristique de cette réalisation, la broche est creuse et le câble de commande est monté coulissant dans la broche, ce qui permet de faire passer le câble dans le dossier et de le cacher à la vue.

Dans les réalisations suivant l'invention, les premiers moyens de précontrainte comprennent par exemple un ressort de rappel du coussin de la position redressée vers la position rabattue, monté sur l'axe de rotation.

De même, les deuxièmes moyens de précontrainte comprennent par exemple un ressort de précontrainte du coussin de la position redressée déverrouillée vers la position redressée verrouillée, monté sur l'axe de rotation.

Les première et troisième réalisations permettent en outre de prévoir un seul ressort à la fois de précontrainte du coussin de la position redressée déverrouillée vers la position redressée verrouillée dans un sens déterminé suivant l'axe de rotation et de précontrainte du coussin de la position redressée vers la position rabattue, le ressort étant monté sur l'axe de rotation. Le bouton ou le câble est apte à agir sur le ressort à l'encontre du sens déterminé pour déverrouiller les moyens de verrouillage réciproque du coussin et de l'axe de rotation. Ces dispositions permettent de simplifier le mécanisme de basculement du coussin.

Suivant une caractéristique des réalisations précitées, l'axe de rotation est formé par une partie sensiblement rectiligne et horizontale de la broche.

Suivant une autre caractéristique des réalisations précitées, l'axe de rotation est distinct de la broche, laquelle est solidaire d'un boîtier supportant l'axe de rotation. Dans ce cas, les moyens de verrouillage réciproque peuvent être prévus sur un tourillon solidaire en rotation du coussin et sur le boîtier.

Suivant une caractéristique des réalisations précitées, les moyens de verrouillage comprennent au moins une aile de guidage, au moins une voie de guidage en rotation de l'aile entre l'une et l'autre des positions redressée et rabattue en position de déverrouillage et, adjacent à la voie de guidage, au moins un taquet apte à être engagé dans un cran prévu sur l'aile ou une cale pour l'aile, pour bloquer en rotation l'aile en position de verrouillage, le taquet ou la cale étant désengagé du cran ou de l'aile en position de déverrouillage, l'aile étant mobile en translation suivant l'axe de rotation par rapport au taquet ou à la cale en position redressée, le taquet ou la cale et le cran étant solidaires en rotation du coussin et de l'axe de rotation.

Un deuxième objet de l'invention est un siège, notamment un siège pour véhicule automobile, comportant des moyens de fixation à un support ainsi qu'une manette pour faire basculer le siège dans la direction allant vers l'avant du siège par rapport au support, caractérisé en ce que un appui-tête tel que décrit ci-dessus est monté sur le dessus du dossier du siège.

Un troisième objet de l'invention est un siège, notamment un siège pour véhicule automobile, comportant des moyens de fixation à un support ainsi qu'une manette pour faire basculer le siège dans la direction allant vers l'avant du siège par rapport au support, caractérisé en ce que l'appui-tête suivant la troisième réalisation est monté sur le dessus du dossier, le câble de commande du coussin étant relié à la manette d'inclinaison, de telle sorte que l'actionnement de la manette provoque le passage du coussin de l'appui-tête de la position redressée à la position rabattue.

L'invention sera mieux comprise à la lumière des dessins, donnés uniquement à titre d'exemples non limitatifs, sur lesquels :
la figure 1 représente schématiquement un siège avant de véhicule automobile, muni de l'appui-tête selon l'invention et vu de côté;
la figure 2 représente schématiquement l'appui-tête selon l'invention, vu de côté;
la figure 3 est une vue en coupe schématique frontale de l'appui-tête selon l'invention dans un premier mode de réalisation permettant de manier l'appui-tête simplement en poussant de la main le coussin;
la figure 4 représente schématiquement en perspective une partie de la broche de l'appui-tête utilisée dans le premier mode de réalisation;
la figure 5 représente schématiquement la partie de la broche selon la figure 4, vue de côté ;
la figure 6 est une vue éclatée de l'appui-tête dans un deuxième mode de réalisation à commande de rabattement par câble ;
la figure 7 est une vue schématique de côté d'un embout de liaison en rotation du coussin avec un tourillon permettant de bloquer le coussin en position redressée, ainsi qu'un troisième mode de réalisation à commande de rabattement à bouton ;
la figure 8 est une vue schématique de dessus du bouton selon la figure 7 ;
la figure 9 est une vue schématique de profil du tourillon et de cales de celui-ci ;
la figure 10 est une vue à l'état démonté du câble prévu dans le deuxième mode de réalisation, et
la figure 11 est une vue à l'état monté du câble prévu dans le deuxième mode de réalisation.

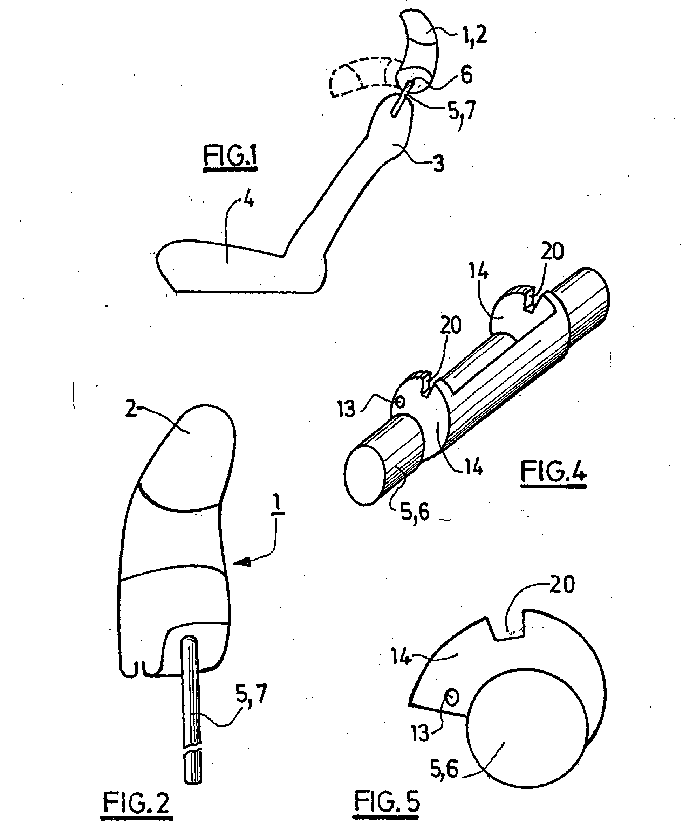

A la figure 1, l'appui-tête 1 comporte un coussin 2 monté sur le dessus du dossier 3 du siège 4 par l'intermédiaire d'une broche 5 métallique d'ancrage.

L'appui-tête peut être mis en position redressée représentée en traits pleins, dans laquelle le coussin se trouve dans le prolongement du dossier 3, ou en position rabattue vers l'avant du siège, représentée en traits discontinus et passer entre ces deux positions par rotation autour d'un axe 6 transversal sensiblement horizontal.

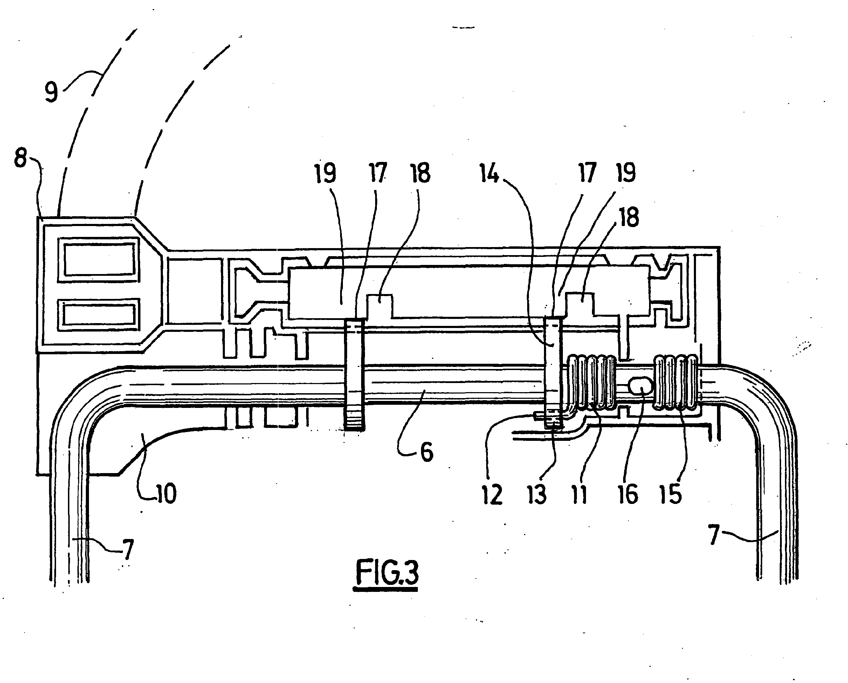

Dans la réalisation représentée à la figure 3, l'axe 6 est formé par une partie transversale et centrale de la broche 5 de forme générale de U raccordée à deux branches 7 latérales d'ancrage au dossier.

Le coussin 2 comporte un boîtier 8 monté basculant sur l'axe 6 entre les positions redressée et rabattue et fixé par ses deux extrémités à une ossature 9 en forme de fer à cheval représentée partiellement en traits discontinus. L'ossature 9 et le boîtier 8 sont enveloppés dans un habillage 10 renfermant une garniture de confort telle que mousse de manière à former un coussin 2 en forme générale d'anneau.

Un premier moyen de précontrainte 11 en rotation du coussin 2 vers la position rabattue est prévu. Dans la réalisation représentée à la figure 3, c'est un ressort hélicoïdal de torsion enfilé autour de l'axe de rotation 6, dont une extrémité 12 est logée dans un trou 13 ménagé dans une aile 14 solidaire de l'axe 6 et dont l'autre extrémité est maintenue sur le boîtier 8 du coussin 2.

Un deuxième moyen 15 de précontrainte du coussin 2 en position redressée d'une position déverrouillée, rendant possible la rotation vers la position rabattue, vers une position redressée verrouillée, ne rendant pas possible la rotation vers la position rabattue, est prévu. Dans la réalisation représentée à la figure 3, c'est un ressort hélicoïdal 15 de compression enfilé autour de l'axe de rotation 6 et repoussant par rapport au boîtier 8 un ergot 16 dépassant de l'axe 6

II est prévu des moyens de verrouillage 17 en position redressée du boîtier 14 du coussin 2 par rapport à l'axe 6. Ceux-ci comprennent à la figure 3 les deux ailes 14. L'axe de rotation 6 est monté tournant dans le boîtier 8 et comporte deux voies 18 de guidage en rotation des ailes 14 entre l'une et l'autre des positions redressée et rabattue en position de déverrouillage du coussin 2.

Deux taquets 19 adjacents aux voies de guidage 18 sont prévus sur le boîtier 8 et sont par exemple formés par des parois intérieures de celui-ci. Un cran 20 est ménagé sur la périphérie des ailes 14. Les taquets 19 sont aptes à bloquer en rotation les ailes 14 en position de verrouillage. Les taquets 19 sont désengagés des crans 20 en position de déverrouillage, les ailes 14 étant mobiles en translation suivant l'axe de rotation 6 par rapport aux taquets 19 en position redressée. Le deuxième moyen de précontrainte 12 pousse les taquets 19 dans les crans 20

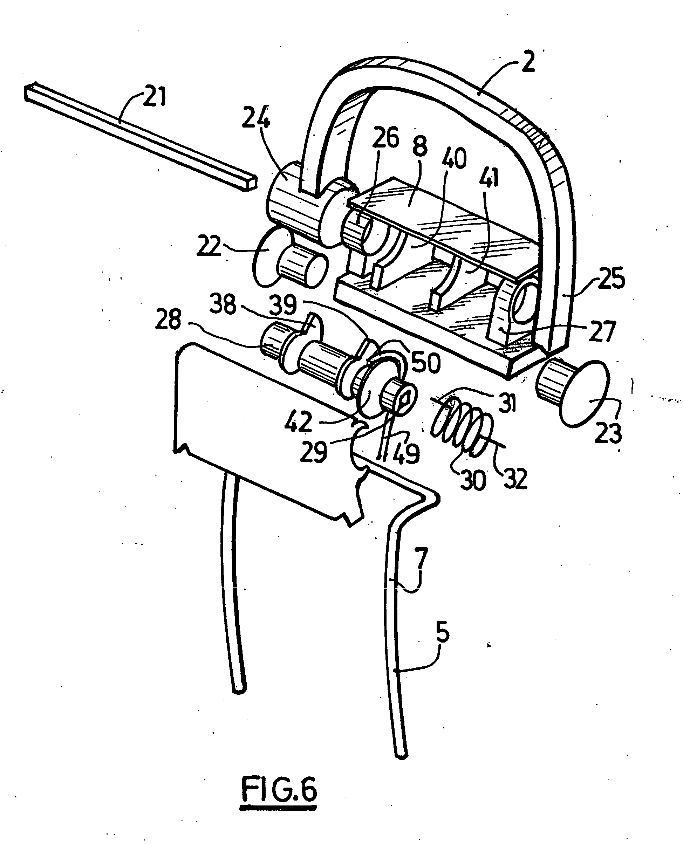

Dans les réalisations représentées aux figures 6 à 8, l'axe de rotation 6 est distinct de la broche 5 et est formé par une barre 21 de section polygonale, par exemple carrée. La broche 5 d'ancrage est solidaire du boîtier 8, par exemple en étant coincée dans des parois inférieures de celui-ci.

Le coussin 2 destiné à l'appui de la nuque d'une personne est monté tournant par rapport au boîtier 8 entre les positions rabattue et redressée. A cet effet, deux paliers 22 et 23 sont montés entre les branches 24, 25 de la partie en U du coussin 2 et deux guides 26, 27 en rotation prévus latéralement sur le boîtier 8 et dans lesquels passent les paliers 22, 23. Un tourillon 28 est guidé en rotation entre les paliers 22, 23 en étant logé par ses extrémités dans ceux-ci. Le tourillon 28 comporte un évidement transversal 29 pour le passage de la barre 21, lequel est de forme complémentaire de la section de celle-ci.

Un ressort hélicoïdal 30 enfilé autour du tourillon sert à la fois à contraindre le coussin 2 à passer de la position redressée verrouillée à la position rabattue et à passer de la position redressée déverrouillée à la position redressée verrouillée. Le ressort 30 est fixé par une première extrémité 31 au tourillon 28 et par une deuxième extrémité 32 au boîtier 8.

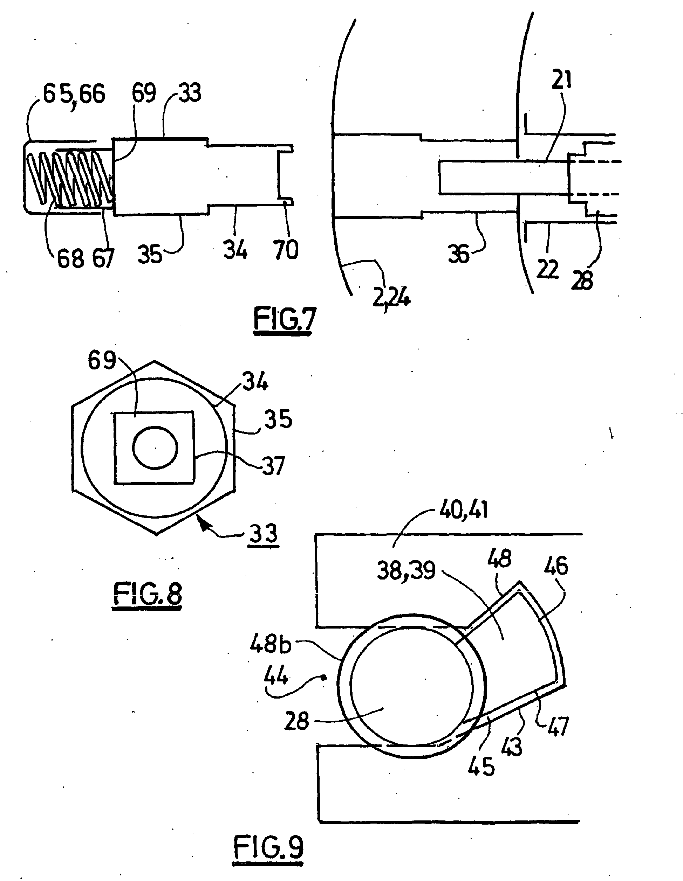

Des moyens sont prévus pour rendre solidaires en rotation les branches 24 et/ou 25 du coussin 2 et la barre 21. Aux figures 7 et 8, il s'agit d'un embout 33 comportant un premier tronçon 34 d'extrémité, de section extérieure circulaire adaptée pour tourner dans le palier 22, 23 correspondant de l'une et/ou l'autre des branches 24, 25 du coussin 2, et un deuxième tronçon 35 de section extérieure adaptée pour entraîner en rotation la branche correspondante 24, 25 du coussin 2 et logé dans un évidement 36 de celle-ci, de section intérieure de forme complémentaire. Le deuxième tronçon 35 a par exemple une section extérieure hexagonale de même que la section intérieure de l'évidement 36, en étant par exemple supérieure à la section du premier tronçon 34. Les premiers et deuxième tronçons 34, 35 de l'embout 33 ont un évidement transversal continu 37 de forme complémentaire de la section de la barre 21, pour recevoir une extrémité de celle-ci. La rotation du tourillon 26 entraîne successivement celle de la barre 21, de l'embout 33 et de la branche correspondante 24 ou 25 du coussin 2 entre l'une et l'autre des positions rabattue et redressée.

Des moyens de verrouillage en position redressée du coussin 2 sont prévus entre le tourillon 28 et le boîtier 8. A cet effet, le tourillon 28 comporte deux ailes 38, 39 sur sa périphérie, tandis que le boîtier 8 comporte deux parois intérieures 40, 41 contre lesquelles les ailes 38, 39 sont guidées lors de la rotation entre l'une et l'autre des positions redressée et rabattue. Le ressort 30 repousse axialement le tourillon 28 contre les parois intérieures 40, 41, par exemple en étant appliqué par sa première extrémité 31 contre un anneau 42 prévu sur la périphérie du tourillon 28. En position redressée, les ailes 38, 39 sont repoussées entre des cales 43 prévues dans les parois 40, 41, empêchant le tourillon 28 et le coussin 2 de tourner en position redressée.

A la figure 9, les cales 43 sont formées par une découpe dans les parois 40, 41, formant un C dans celles-ci et comportant une ouverture 44 pour le passage du tourillon 28. L'ouverture 44 est prolongée dans la paroi 40, 41 par un creux 45 de forme complémentaire de l'aile 38, 39. L'aile 38, 39 et le creux 44 sont par exemple à bord périphérique 46 en arc de cercle relié par deux bords rectilignes 47, 48 à l'ouverture 44. Un rebord circulaire 48b est prévu sur la périphérie du tourillon 28 du côté tourné vers le ressort 30, contre les ailes 38, 39, afin de bloquer en translation le tourillon 28, lorsque les ailes sont calées.

Des moyens sont prévus pour pouvoir extraire les ailes 38, 39 d'entre les cales 43 lorsque le coussin 2 est verrouillé en position redressée.

A la figure 6, un câble 49 de traction permet de translater le tourillon 28 à l'encontre du ressort 30. Le câble 30 est fixé par une extrémité 50 au tourillon, par exemple à l'aile 39 et est relié à l'extérieur du boîtier 8, permettant de faire passer le coussin 2 de la position redressée à la position rabattue de l'extérieur de l'appui-tête. Le câble est par exemple relié à la manette du siège prévue entre le dossier et l'assise pour faire basculer le dossier ou le siège entier dans la direction allant vers l'avant du siège, dans les voitures dites « 3 portes ». L'actionnement de la manette tire le câble et provoque le passage du coussin de l'appui-tête de la position redressée à la position rabattue.

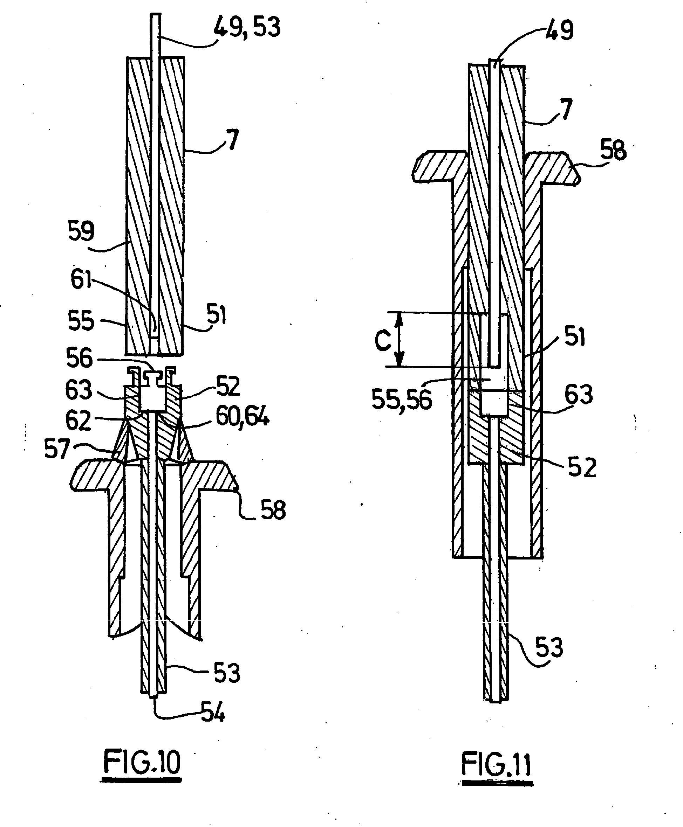

Aux figures 10 et 11, le câble 49 est monté coulissant dans la broche 5 d'ancrage de l'appui-tête, dans sa branche 7 latérale située du côté du ressort 30 par rapport au tourillon 28, le câble 49 débouchant d'un trou de celle-ci dans le boîtier 8. Un embout 51 est monté à l'extrémité de cette branche 7. L'embout 51 est encliqueté à une entretoise 52 prolongée par une gaine 53 de câble. Le câble 49 est en deux tronçons 53, 54 reliés entre eux par l'intermédiaire de pièces d'encliquetage réciproque 55, 56 aptes à coulisser respectivement dans l'embout 51 et l'entretoise 52. L'entretoise 52 comporte des pièces 57 de réglage en hauteur de la branche 7 d'ancrage par rapport à une glissière 58 fixée au dessus du siège, dans laquelle l'entretoise 52 est immobilisée. Les pièces 55, 56 et les tronçons de câble 53, 54 connectés ont une course C limitée par des butées 59, 60 prévues respectivement côté embout 51 et entretoise 52, les pièces d'encliquetage 55, 56 comportant des épaulements correspondants 61, 62. La pièce 56 d'encliquetage comporte par exemple un épaississement 63 venant buter sur un siège 64 ménagé dans l'entretoise 52 et la butée 59 est par exemple formée par un épaulement prévu à l'extrémité de la branche 7 d'ancrage. La course C du câble permet de faire passer le tourillon 28 de sa position bloquée en rotation dans les cales 43 à une position dans laquelle il en est extrait pour pouvoir tourner.

Aux figures 7 et 8, les moyens de déverrouillage du coussin 2 en position redressée comprennent un bouton 65 monté dans la branche 24 du coussin 2 prévue du côté des cales 43 par rapport aux ailes 38, 39 du tourillon 28. Le bouton 65 est accessible de l'extérieur de l'appui-tête et pousse le tourillon 28 à l'extérieur des cales 43, lorsqu'il est appuyé d'un doigt dessus. Le bouton 65 comporte un capot 66 emmanché sur une base 67 prolongeant l'embout 33 en son deuxième tronçon 35. Un ressort hélicoïdal 68 de contre-appui est logé dans la base 67 contre le capot 66 et contre une paroi 69 par exemple percée en son centre, prévue entre le tronçon 35 et la base 67, les éloignant entre eux. Des moyens tels que crochets ou autres sont prévus sur les parties face à face du capot 66 et de la base 67 pour retenir le capot 68. Des dents 70 sur l'extrémité libre du premier tronçon 34 et des parties de formes correspondantes de l'extrémité du tourillon 28 permettent une meilleure prise du tourillon 28 par l'embout 33.

Bien entendu, l'invention n'est pas limitée aux réalisations précédentes. En particulier, le bouton et le câble peuvent être prévus également avec les taquets et crans prévus à la figure 3 et les cales peuvent être prévues en plus ou au lieu de ces taquets et crans dans la réalisation selon la figure 3. Les crans, taquets, voies de guidage, cales et ailes prévues pour le verrouillage et le déverrouillage du coussin en position redressée peuvent être prévus en un seul exemplaire, ou en plus de deux exemplaires dans des réalisations non représentées.

## Revendications

1. Appui-tête (1) de siège, notamment de siège de véhicule automobile, comportant au moins une broche (5, 7) pour le montage de l'appui-tête (1) sur le siège et un coussin (2), ledit coussin (2) étant mobile en rotation par rapport à un axe (6) de rotation fixe par rapport à la broche (5, 7) entre l'une et l'autre d'une position redressée et d'une position rabattue vers l'avant du siège, des moyens (14, 17, 18, 19, 38, 39, 40, 41, 43) de verrouillage réciproque du coussin (2) et de l'axe (6) de rotation dans la position redressée, des moyens (49, 65) pour faire passer le coussin (2) en position redressée de la position verrouillée à une position déverrouillée, et des premiers moyens (11, 30) de précontrainte du coussin (2) aptes à le faire passer de la position redressée déverrouillée à la position rabattue étant prévus, **caractérisé en ce que** les moyens de verrouillage (14, 17, 18, 19, 38, 39, 40, 41, 43) sont activés, respectivement désactivés, par déplacement latéral du coussin (2).

2. Appui-tête (1) suivant la revendication 1, **caractérisé en ce que** le déplacement latéral est provoqué par un bouton (65) accessible de la main, ledit bouton (65) étant prévu sur le coussin (2).

3. Appui-tête (1) suivant la revendication 1, **caractérisé en ce qu'**un deuxième moyen (15, 30) de précontrainte du coussin (2) de la position redressée déverrouillée vers la position redressée verrouillée est prévu, le coussin (2) étant monté sur l'axe (6) de rotation de telle manière qu'il peut être déplacé par rapport à la broche (5, 7) pour passer de la position redressée verrouillée à la position redressée déverrouillée à l'encontre du deuxième moyen (15, 30) de précontrainte.

4. Appui-tête (1) suivant la revendication 1, **caractérisé en ce qu'**un deuxième moyen (15, 30) de précontrainte du coussin (2) de la position redressée déverrouillée vers la position redressée verrouillée et un câble (49) de commande à distance pour faire passer le coussin (2) de la position redressée verrouillée à la position redressée déverrouillée à l'encontre du deuxième moyen (15, 30) de précontrainte sont prévus.

5. Appui-tête (1) suivant la revendication 4, **caractérisé en ce que** la broche (5, 7) est creuse et le câble (49) de commande est monté coulissant dans la broche (5, 7).

6. Appui-tête (1) suivant l'une quelconque des revendications précédentes, **caractérisé en ce que** les premiers moyens (11, 30) de précontrainte comprennent un ressort (11) de rappel du coussin (2) de la position redressée vers la position rabattue, monté sur l'axe (6) de rotation.

7. Appui-tête (1) suivant l'une quelconque des revendications précédentes, **caractérisé en ce que** les deuxièmes moyens (15, 30) de précontrainte comprennent un ressort (15) de précontrainte du coussin (2) de la position redressée déverrouillée vers la position redressée verrouillée, monté sur l'axe (6) de rotation.

8. Appui-tête (1) suivant la revendication 2 ou 4, **caractérisé en ce qu'**un seul ressort (30) à la fois de précontrainte du coussin (2) de la position redressée déverrouillée vers la position redressée verrouillée dans un sens déterminé suivant l'axe (6) de rotation et de précontrainte du coussin (2) de la position redressée vers la position rabattue est monté sur l'axe (6) de rotation, le bouton (65) ou le câble (49) étant apte à agir sur le ressort (30) à l'encontre du sens déterminé pour déverrouiller les moyens (14, 17, 18, 19, 38, 39, 40, 41, 43) de verrouillage réciproque du coussin (2) et de l'axe (6) de rotation.

9. Appui-tête (1) suivant l'une quelconque des revendications précédentes, **caractérisé en ce que** l'axe (6) de rotation est formé par une partie sensiblement rectiligne et horizontale de la broche (5, 7).

10. Appui-tête (1) suivant l'une quelconque des revendications 1 à 8, **caractérisé en ce que** l'axe (6) de rotation est distinct de la broche (5, 7), laquelle est solidaire d'un boîtier (8) supportant l'axe (6) de rotation.

11. Appui-tête (1) suivant la revendication 10, **caractérisé en ce que** les moyens (14, 17, 18, 19, 38, 39, 40, 41, 43) de verrouillage réciproque sont prévus sur un tourillon (28) solidaire en rotation du coussin (2) et sur le boîtier (8).

12. Appui-tête (1) selon l'une quelconque des revendications précédentes, **caractérisé en ce que** les moyens (14, 17, 18, 19, 38, 39, 40, 41, 43) de verrouillage comprennent au moins une aile (14, 38, 39) de guidage, au moins une voie (18) de guidage en rotation de l'aile (14, 38, 39) entre l'une et l'autre des positions redressée et rabattue en position de déverrouillage et, adjacent à la voie (18) de guidage, au moins un taquet (19) apte à être engagé dans un cran (20) prévu sur l'aile (14, 38, 39) ou une cale (43) pour l'aile (14, 38, 39), pour bloquer en rotation l'aile (14, 38, 39) en position de verrouillage, le taquet (19) ou la cale (43) étant désengagé du cran (20) ou de l'aile (14, 38, 39) en position de déverrouillage, l'aile (14, 38, 39) étant mobile en translation suivant l'axe (6) de rotation par rapport au taquet (19) ou à la cale (43) en position redressée, le taquet (19) ou la cale (43) et le cran (20) étant solidaires en rotation du coussin (2) et de l'axe (6) de rotation.

13. Siège, notamment siège pour véhicule automobile, comportant des moyens de fixation à un support ainsi qu'une manette pour faire basculer le siège dans la direction allant vers l'avant du siège par rapport au support, **caractérisé en ce que** l'appui-tête (1) suivant l'une quelconque des revendications 1 à 10 est monté sur le dessus du dossier du siège.

14. Siège, notamment siège pour véhicule automobile, comportant des moyens de fixation à un support ainsi qu'une manette pour faire basculer le siège dans la direction allant vers l'avant du siège par rapport au support, **caractérisé en ce que** l'appui-tête (1) suivant l'une quelconque des revendications 4 à 12, lorsqu'elles dépendent de la revendication 4 ou 5, est monté sur le dessus du dossier, le câble (49) de commande étant relié à la manette d'inclinaison, de telle sorte que l'actionnement de la manette provoque le passage du coussin (2) de l'appui-tête (1) de la position redressée à la position rabattue.

## Claims

1. Head rest (1) for a seat, especially a seat for an automobile vehicle, comprising at least one spindle (5, 7) for the assembly of the head rest (1) onto the seat and a cushion (2), wherein said cushion (2) is rotationally mobile with respect to an axis (6) of rotation that is fixed with respect to the spindle (5, 7) between either one of a upright position and a position inclined towards the front of the seat, reciprocal locking means (14, 17, 18, 19, 38, 39, 40, 41, 43) of the cushion (2) and the axis (6) of rotation in the upright position, means (49, 65) for moving the cushion (2) to the upright position from the locked position to an unlocked position, and first pre-stressed means (11, 30) of the cushion (2) capable of moving it from the upright locked position to the inclined position are provided, **characterised in that** the locking means (14, 17, 18, 19, 38, 39, 40, 41, 43) are activated, respectively deactivated, by lateral displacement of the cushion (2).

2. Head rest (1) according to claim 1, **characterised in that** the lateral displacement is caused by a button (65) accessible by hand, wherein said button (65) is fitted on the cushion (2).

3. Head rest (1) according to claim 1, **characterised in that** second pre-stressed means (15, 30) of the cushion (2) from the upright unlocked position to the upright locked position are provided, wherein the cushion (2) is mounted on the axis (6) of rotation such that it may be displaced with respect to the spindle (5, 7) to move from the upright locked position to the upright unlocked position against the second pre-stressed means (15, 30).

4. Head rest (1) according to claim 1, **characterised in that** second pre-stressed means (15, 30) of the cushion (2) from the upright unlocked position to the upright locked position and a remote control cable (49) to move the cushion (2) from the upright locked position to the upright unlocked position against the second pre-stressed means (15, 30) are provided.

5. Head rest (1) according to claim 4, **characterised in that** the spindle (5, 7) is hollow and the control cable (49) is mounted so that it slides inside the spindle (5, 7).

6. Head rest (1) according to any of the previous claims, **characterised in that** the first pre-stressed means (11, 30) comprise a cushion (2) return spring (11) from the upright position to the inclined position, mounted on the axis (6) of rotation.

7. Head rest (1) according to any of the previous claims, **characterised in that** the second pre-stressed means (15, 30) comprise a cushion (2) pre-stress spring (15) from the upright unlocked position to the upright locked position, mounted on the axis (6) of rotation.

8. Head rest (1) according to claim 2 or 4, **characterised in that** a single spring (30) both for the cushion (2) pre-stress from the upright unlocked position to the upright locked position in a direction determined along the axis (6) of rotation and the cushion (2) pre-stress from the upright position to the inclined position is mounted on the axis (6) of rotation, wherein the button (65) or the cable (49) is able to act on the spring (30) against the determined direction to unlock the reciprocal locking means (14, 17, 18, 19, 38, 39, 40, 41, 43) of the cushion (2) and the axis (6) of rotation.

9. Head rest (1) according to any of the previous claims, **characterised in that** the axis (6) of rotation is formed by a substantially rectilinear and horizontal part of the spindle (5, 7).

10. Head rest (1) according to any of claims 1 to 8, **characterised in that** the axis (6) of rotation is distinct from the spindle (5, 7), which is attached to a housing (8) supporting the axis (6) of rotation.

11. Head rest (1) according to claim 10, **characterised in that** the reciprocal locking means (14, 17, 18, 19, 38, 39, 40, 41, 43) are fitted on a trunnion (28) attached in rotation to the cushion (2) and the housing (8).

12. Head rest (1) according to any of the previous claims, **characterised in that** the locking means (14, 17, 18, 19, 38, 39, 40, 41, 43) comprise at least one guide wing (14, 38, 39), at least one groove (18) to guide the rotation of the wing (14, 38, 39) between either one of the upright or inclined positions in the unlocked position and, adjacent to the guide groove (18), at least one tongue (19) that may be inserted into a notch (20) provided on the wing (14, 38, 39) or a spacer (43) for the wing (14, 38, 39), to block the rotation of the wing (14, 38, 39) in the locking position, wherein the tongue (19) or the spacer (43) is disengaged from the notch (20) or the wing (14, 38, 39) in the unlocked position, wherein the wing (14, 38, 39) is mobile in translation in the axis (6) of rotation with respect to the tongue (19) or the spacer (43) in the upright position, wherein the tongue (19) or the spacer (43) and the notch (20) are attached in rotation to the cushion (2) and the axis (6) of rotation.

13. Seat, especially a seat for an automobile vehicle, comprising means for attachment to a support as well as a lever to tilt the seat in the direction towards the front of the seat with respect to the support, **characterised in that** the head rest (1) according to any of claims 1 to 10 is mounted on the top of the seatback of the seat.

14. Seat, especially a seat for an automobile vehicle, comprising means for attachment to a support as well as a lever to tilt the seat in the direction towards the front of the seat with respect to the support, **characterised in that** the head rest (1) according to any of claims 4 to 12, when they are dependent on claim 4 or 5, is mounted on the top of the seatback, wherein the control cable (49) is connected to the tilting lever such that the actuation of the lever causes the cushion (2) of the head rest (1) to move from the upright position to the inclined position.

## Patentansprüche

1. Kopfstütze (1) des Sitzes, insbesondere des Sitzes eines Kraftfahrzeuges, umfassend mindestens einen Stift (5, 7) für die Montage der Kopfstütze (1) auf dem Sitz und ein Kissen (2), wobei das Kissen (2) in der Drehung bezüglich einer Drehachse (6), die mit Bezug auf den Stift (5, 7) fest ist, zwischen der einen und der anderen einer gerade gestellten Position und einer in Richtung auf die Vorderseite des Sitzes heruntergeklappten Position drehbar ist, Mittel (14, 17, 18, 19, 38, 39, 40, 41, 43) zur wechselseitigen Blockierung des Kissens (2) und der Drehachse (6) in der gerade gestellten Position, Mittel (49, 65), um das Kissen (2) in der gerade gestellten Position von der blockierten Position in eine entblockierte Position zu bringen, und erste Mittel (11, 30) zur Vorspannung des Kissens (2), die dazu geeignet sind, es von der gerade gestellten entblockierten Position in die heruntergeklappte Position, zu bringen, vorgesehen sind, **dadurch gekennzeichnet, dass** die BlockierungsmiLtel (14, 17, 18, 19, 38, 39, 40, 41, 43) durch die seitliche Verschiebung des Kissens (2) aktiviert bzw. deaktiviert werden.

2. Kopfstütze (1) nach Anspruch 1, **dadurch gekennzeichnet, dass** die seitliche Verschiebung durch einen Druckknopf (65) ausgelöst wird, der für die Hand zugänglich ist, wobei der Knopf (65) auf dem Kissen (2) vorgesehen ist.

3. Kopfstütze (1) nach Anspruch 1, **dadurch gekennzeichnet, dass** ein zweites Mittel (15, 30) zur Vorspannung des Kissens (2) von der gerade gestellten entblockierten Position in die gerade gestellte blockierte Position vorgesehen ist, wobei das Kissen (2) auf der Drehachse (6) derartig montiert ist, dass es bezüglich des Stiftes (5, 7) verschoben werden kann, um von der gerade gestellten blockierten Position in die gerade gestellte entblockierte Position gegen das zweite Mittel der Vorspannung (15, 30) zu gelangen.

4. Kopfstütze (1) nach Anspruch 1, **dadurch gekennzeichnet, dass** ein zweites Mittel (15, 30) zur Vorspannung des Kissens (2) von der gerade gestellten entblockierten Position in die gerade gestellte blockierte Position und ein Kabel (49) zur Fernsteuerung, um das Kissen (2) von der gerade gestellten blockierten Position in die gerade gestellte entblockierte Position gegen das zweite Mittel (15, 30) der Vorspannung zu bringen, vorgesehen sind.

5. Kopfstütze (1) nach Anspruch 4, **dadurch gekennzeichnet, dass** der Stift (5, 7) hohl ist und das Kabel (49) zu Steuerung herausziehbar im Stift (5, 7) montiert ist.

6. Kopfstütze (1) nach einem der vorhergehenden Ansprüche, **dadurch gekennzeichnet, dass** die ersten Mittel (11, 30) zur Vorspannung eine Feder (11) zur Rückstellung des Kissens (2) von der gerade gestellten Position in die heruntergeklappte Position umfassen, die auf der Drehachse (6) montiert ist.

7. Kopfstütze (1) nach einem der vorhergehenden Ansprüche, **dadurch gekennzeichnet, dass** die zweiten Mittel (15, 30) zur Vorspannung eine Feder (15) zur Vorspannung des Kissens (2) von der gerade gestellten entblockierten Position in die gerade gestellte blockierte Position umfassen, die auf der Drehachse (6) montiert ist.

8. Kopfstütze (1) nach Anspruch 2 oder 4, **dadurch gekennzeichnet, dass** eine einzige Feder (30) gleichzeitig zur Vorspannung des Kissens (2) von der gerade gestellten entblockierten Position in die gerade gestellte blockierte Position in einer Richtung, die gemäß der Drehachse (6) festgesetzt ist, und zur Vorspannung des Kissens (2) aus der gerade gestellten Position in die heruntergeklappte Position auf die Drehachse (6) montiert ist, wobei der Druckknopf (65) oder das Kabel (49) dazu geeignet sind, auf die Feder (30) gegen die Richtung zu wirken, die festgelegt ist, um die Mittel (14, 17, 18, 19, 38, 39, 40, 41, 43) zur wechselseitigen Blockierung des Kissens (2) und der Drehachse (6) zu entblockieren,

9. Kopfstütze (1) nach einem der vorhergehenden Ansprüche, **dadurch gekennzeichnet, dass** die Drehachse (6) aus einem deutlich geradlinigen und horizontalen Teil des Stiftes (5, 7) gebildet ist.

10. Kopfstütze (1) nach einem der vorhergehenden Ansprüche 1 bis 8, **dadurch gekennzeichnet, dass** die Drehachse (6) vom Stift (5, 7) verschieden ist, wobei dieser mit einem Gehäuse (8), das die Drehachse (6) stützt, fest verbunden ist.

11. Kopfstütze (1) nach Anspruch 10, **dadurch gekennzeichnet, dass** die Mittel (14, 17, 18, 19, 38, 39, 40, 41, 43) zur wechselseitigen Blockierung auf einem Zapfen (28), der in der Drehung mit dem Kissen (2) fest verbunden ist, und auf dem Gehäuse (8) vorgesehen sind.

12. Kopfstütze (1) nach einem der vorhergehenden Ansprüche, **dadurch gekennzeichnet, dass** die Mittel (14, 17, 18, 19, 38, 39, 40, 41, 43) zur Blockierung mindestens einen Führungsflügel (14, 38, 39), mindestens eine Führungsspur (18) in der Drehung des Flügels (14, 38, 39) zwischen der einen und der anderen der gerade gestellten und der heruntergeklappten Position in der entblockierten Position und, angrenzend an die Führungsspur (18), mindestens einen Vorsprung (19), der dazu geeignet ist, in eine Kerbe (20) einzugreifen, die auf dem Flügel (14, 38, 39) vorgesehen ist, oder einen Keil (43) für den Flügel (14, 38, 39) umfassen, um in der Drehung den Flügel (14, 38, 39) in der Position der Blockierung festzustellen, wobei der Vorsprung (19) oder der Keil (43) von der Kerbe (20) oder dem Flügel (14, 38, 39) in der Position der Entblockierung gelöst ist, wobei der Flügel (14, 38, 39) in der Verschiebung entlang der Drehachse (6) hinsichtlich des Vorsprunges (19) oder des Keils (43) in gerade gestellter Position beweglich ist, wobei der Vorsprung (19) oder der Keil (43) und die Kerbe (20) in der Drehung des Kissens (2) und der Drehachse (6) fest verbunden sind.

13. Sitz, insbesondere Sitz für ein Kraftfahrzeug, umfassend Mittel zur Befestigung an einen Träger sowie einen Hebel, um den Sitz in die Richtung auf die Vorderseite des Sitzes hinsichtlich des Trägers kippen zu lassen, **dadurch gekennzeichnet, dass** die Kopfstütze (1) nach einem der Ansprüche 1 bis 10 auf der Oberseite der Rückenlehne des Sitzes montiert ist.

14. Sitz, insbesondere Sitz für ein Kraftfahrzeug, umfassend Mittel zur Befestigung an einen Träger sowie einen Hebel, um den Sitz in die Richtung auf die Vorderseite des Sitzes hinsichtlich des Trägers kippen zu lassen, **dadurch gekennzeichnet, dass** die Kopfstütze (1) nach einem der Ansprüche 4 bis 12, wenn sie von Anspruch 4 oder 5 abhängen, auf die Oberseite der Rückenlehne montiert ist, wobei das Steuerkabel (49) derartig mit dem Neigungshebel verbunden ist, dass die Betätigung des Hebels den Übergang des Kissens (2) der Kopfstütze (1) von der gerade gestellten Position in die heruntergeklappte Position auslöst.
